(19) **Europäisches Patentamt / European Patent Office / Office européen des brevets**

(11) **EP 2 104 037 A1**

(12) **EUROPEAN PATENT APPLICATION**

(43) Date of publication:
**23.09.2009 Bulletin 2009/39**

(51) Int Cl.:
***G06F 9/44*** *(2006.01)*

(21) Application number: **08165215.8**

(22) Date of filing: **26.09.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS** | (72) Inventors:<br>• **Bliss, Ronald E.**<br>  **Twinsburg, OH 44087 (US)**<br>• **Hall, Kenwood H.**<br>  **Hudson, OH 44236 (US)** |
| (30) Priority: **28.09.2007 US 864634** | (74) Representative: **Grünecker, Kinkeldey,**<br>**Stockmair & Schwanhäusser**<br>**Anwaltssozietät**<br>**Leopoldstrasse 4**<br>**80802 München (DE)** |
| (71) Applicant: **Rockwell Automation Technologies, Inc.**<br>**Mayfield Heights, OH 44124 (US)** | |

(54) **Programmable controller programming with embedded macro capability**

(57)    A software development tool for an industrial control system is provided. The tool includes one or more identifier components that indicate a portion of a data structure. A macro component maps one or more substitution values indicated by the identifier components into an alternative form of the data structure.

FIG. 1

**Description**

TECHNICAL FIELD

The claimed subject matter relates generally to software development systems and more particularly to controller documentation and variables that have macro components associated therewith to facilitate reusability and portability of controller software.

BACKGROUND

Software Documentation or Source Code Documentation is written text that accompanies computer software and is often created in a computer development environment. Generally, such documentation explains how the underlying code operates and/or how to utilize the code. The term software documentation can have more than one context and thus exist in different forms. Some example types of documentation include architecture or design documentation for software. Another form includes technical documentation of code, algorithms, interfaces, and APIs. Still yet other forms of documentation include manuals for the end-user, system administrators, support staff along with marketing literature including product briefs and promotional information.

Design documents tend to take a broad view. Rather than describe how things are used, this type of documentation focuses more on the why. For example, in a design document, a programmer may explain the rationale behind organizing a data structure in a particular manner, or may list member functions of a particular object and how to add new objects to the code. This may include explaining the reasons why a given class is constructed in a particular manner, outlining patterns, discussing alternative designs, outlining ideas for improvement, or providing plans for how to improve designs later on such as with respect to future projects. This type of documentation is typically not considered appropriate for code or technical documentation however that is designed with other requirements in mind.

Regarding technical documentation, this is the type of information most programmers think of when using the term software documentation. When creating software, code alone is insufficient. There should be some text along with the code to describe various aspects of its intended operation. This documentation is usually embedded within the source code itself so it is readily accessible to anyone who may be traversing though it. In one instance, comments may be added to source code that can be highly technical and are mainly employed to define and explain APIs, data structures and algorithms. For example, one might use this documentation to explain that a variable refers to a particular location or machine in a factory. It is important for code documents to be thorough, but not so verbose that it becomes difficult to maintain. In addition to source code documentation, other technical documentation requirements may include descriptions on tasks, routines, controllers, modules, data types, tags, phases, add-on instructions, rungs of ladder diagram (LD), text boxes in function block diagram (FBD) and Sequential Function Chart (SFC), lines in Structured Text (ST) programming and Instruction List (IL) languages and so forth.

One particular type of documentation tool relates to programmable logic controller (PLC) programming software. The ability to reuse programs, routines, add on instructions or User Defined Functions is limited with such tools since comments, descriptions and data table values do not reflect the name, location or parameters used to create new instances of a PLC variable. For example, to add a new instance of a program called Valve 101, it would be desirable to have all the descriptions, rung comments, operand comments and some data table string values reflect the name of the respective routine. Routines and programs would also be easier to reuse if some of the data table values could be computed from other values. Currently, many users have built external tools to combine programs and to adjust the comments and internal strings to build a complete project. This type of external processing to a developed program is inefficient however and costly to those who design and maintain such programs especially when attempting to transport developed applications to other programs.

SUMMARY

The following presents a simplified summary in order to provide a basic understanding of some aspects described herein. This summary is not an extensive overview nor is intended to identify key/critical elements or to delineate the scope of the various aspects described herein. Its sole purpose is to present some concepts in a simplified form as a prelude to the more detailed description that is presented later.

Macro substitution capabilities are provided with a software development tool to enable efficient documentation or addressing of program items while facilitating transportability between software applications. One or more identifier components are employed to indicate a portion of a data structure that may have an alternative rendering or data value. A macro component maps substitution values into data locations that are outlined, identified, or indicated by the identifier components. For example, a data structure may have a portion identified as #program name#, where "#" is an example identifier used to identify beginning and ending portions of a data structure such as a rung, a value, a tag name, a string name or value for the respective string and so forth.

When the macro locates the identifier components, it maps pre-determined substitution values in place of the data indicated within an area outlined by the identifier components. In this example, a substitution value (or name) of e.g., Mixer Program would be substituted for the program name. Thus, if a rung comments said, "The following ten instructions apply to the #program name#", the macro component when executed would show the comment as "The following ten instructions apply to the Mixer Program", where the Mixer program is the substitution value or name mapped in place of the string "program name." In this manner, when code is transported to an alternative application, names and values can be updated in a single area, where the macro component automatically propagates such changes though out a program. This reduces development and validation time to propagate the changes while mitigating errors during the propagation.

To the accomplishment of the foregoing and related ends, certain illustrative aspects are described herein in connection with the following description and the annexed drawings. These aspects are indicative of various ways which can be practiced, all of which are intended to be covered herein. Other advantages and novel features may become apparent from the following detailed description when considered in conjunction with the drawings.

BRIEF DESCRIPTION OF THE DRAWINGS

Fig. 1 is a schematic block diagram illustrating a software development system providing macro data substitution capability.

Fig. 2 is a diagram illustrating a user interface providing switching functionality between normal data views and macro views.

Fig. 3 is a diagram illustrating data substitution examples for macro components.

Fig. 4 is a diagram illustrating an example development system.

Figs. 5-10 illustrate example macro interfaces and applications for development or documentation tools.

Fig. 11 is a flow diagram illustrating a macro substitution process.

Fig. 12 illustrates an example development system computing environment.

DETAILED DESCRIPTION

Systems and methods are provided to facilitate reusable software design and documentation. In one aspect, a software development tool for an industrial control system is provided. The tool includes one or more identifier components that indicate a portion of a data structure. A macro component maps one or more substitution values indicated by the identifier components into an alternative form of the data structure.

It is noted that as used in this application, terms such as "component," "object," "interface," "identifier," "macro," and the like are intended to refer to a computer-related entity, either hardware, a combination of hardware and software, software, or software in execution as applied to an automation system for industrial control. For example, a component may be, but is not limited to being, a process running on a processor, a processor, an object, an executable, a thread of execution, a program and a computer. By way of illustration, both an application running on a server and the server can be components. One or more components may reside within a process and/or thread of execution and a component may be localized on one computer and/or distributed between two or more computers, industrial controllers, and/or modules communicating therewith. Furthermore, it is noted that the term translated language and localized language can have similar meanings. Thus, documentation that has been translated from one language to another can be referred to as having been localized.

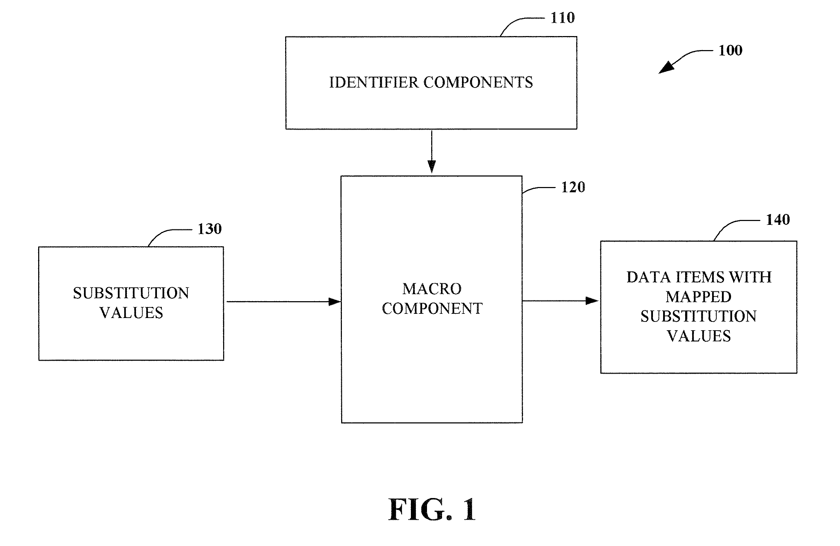

Referring initially to Fig. 1, a software development system 100 provides macro data substitution capability. In general, macro substitution enables a software development tool to provide efficient documentation or addressing of program items while facilitating transportability between software applications. Although not shown, the components in the system 100 can be provided as part of an industrial control system software development tool. One or more identifier components 110 are employed to indicate a portion of a data structure that may have an alternative rendering or data value. Such data structures can be a string name that have an alternative name for example or name that points to an actual data value, for example. A macro component 120 maps substitution values into data locations that are outlined, identified, or indicated by the identifier components 110. For example, a data structure may have a portion identified as %program name%, where "%" is an example identifier used to identify beginning and ending portions of a data structure such as a rung, a value, a tag name, a string name or value for the respective string and so forth.

When the macro component 120 locates the identifier components 110, it maps one or more pre-determined substitution values 130 in place of the data indicated within an area outlined by the identifier components 110. In this example, a substitution value (or name) of e.g., Controller Program would be substituted for the program name. Thus, if a rung comments said, "The following instructions apply to the %program name%", the macro component 120 when executed would show the comment as "The following instructions apply to the Controller Program", where the Controller Program is the substitution value 130 or name mapped in place of the string "program name." As shown, the mapping is indicated as one or more data items 140 that have the respective substitution values 130 mapped in place of the data indicated by the identifier components 110. In this manner, when code is transported to an alternative application, names and values can be updated in a single area such as a storage location associated with a development tool, where the macro component 120 automatically propagates such changes though out a program. This can be considered a form of inheritance because the original comment text "inherits" the value based one where it is used in the system. This reduces development and validation time to propagate the changes in various locations while mitigating errors during the propagation.

The system 100 enables descriptions, comments, strings and data table values to be generated by a user-defined macro 120. The macro 120 enables the user to insert controller, program, task, routine, tag values, and instance names into descriptions, comments, and data table strings. An extension of this feature enables macros with arithmetic capabilities for initializing numeric data table values. In a normal user interface display, the user would see a rendered output of the macro 120 but if the user edited the description, comment or string the macro representation could be shown if desired. For example if a program was named V101, the description of the program could be: %local program name% valve control program, where the rendered output for normal display would be: V101 valve control program.

If the program was copied to another controller and the program named V203 the comment would change to: V203 valve control program - without the user having to remember to change the description. This can also be applied to initializing data table strings. For example:

Equipment_Name = %local program name % is Macro view and Equipment_Name = V101 is rendered view. In another example: Alarm_String = Valve %local program name% failed to open is Macro View, whereas Alarm_String = Valve V101 failed to open is the rendered view.

The macro capability can be extended to numeric values in substantially any controller data table (or other module table) initialization. Thus, macros can include numeric computations inside of an identified data structure. For example:

$$Nominal\_Flow\_Rate = 50.0$$

$$High\_Flow\_Alarm = \%Nominal\_Flow\_Rate * 1.7\%$$

$$Low\_Flow\_Alarm = \% Nominal\_Flow\_Rate * .7\%$$

In another aspect, a development system is provided. The system includes means for programming (identifier components 110) one or more identifier components and means for generating data values (substitution values 130) for the identifier components. This also includes means for translating (macro component 120) the data values to locations indicated by the identifier components.

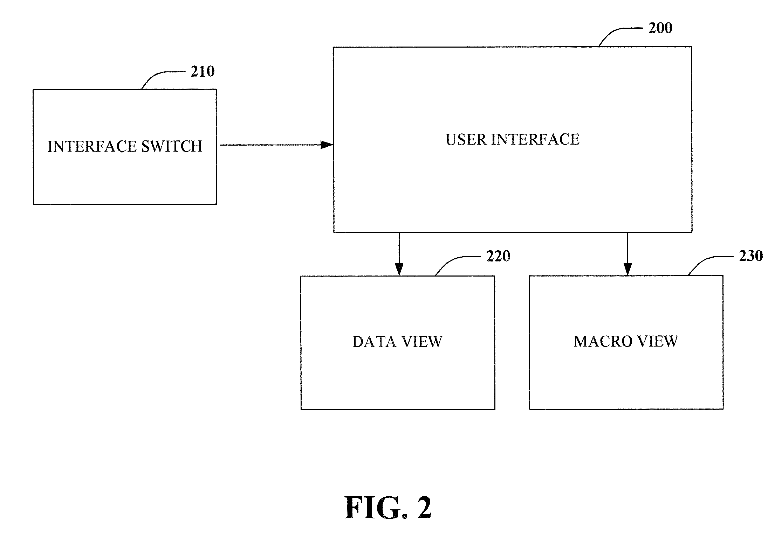

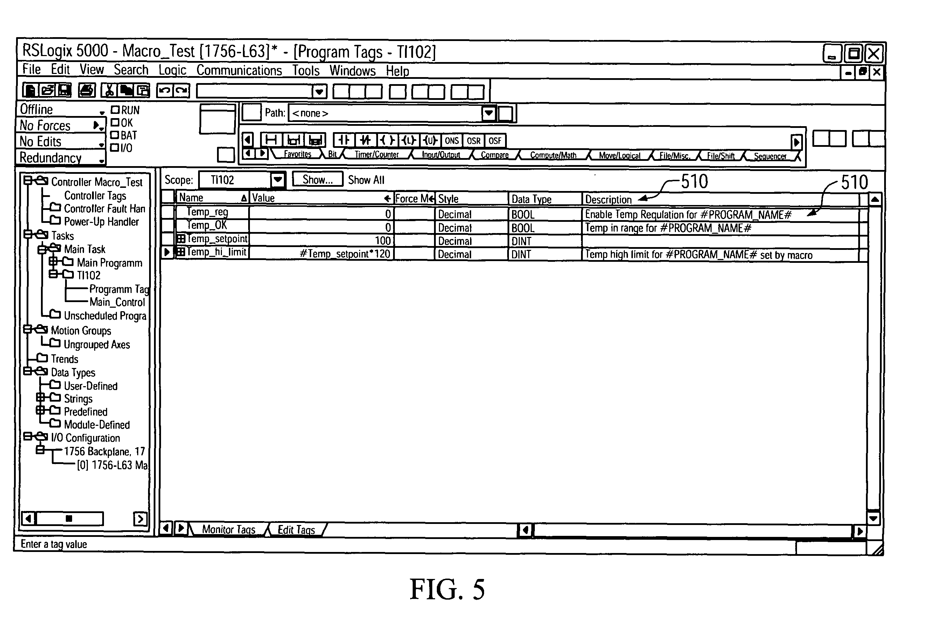

Referring now to Fig. 2, a user interface 200 is illustrated providing switching functionality between normal program views and macro views. The user interface 200 can apply to substantially any programming tool that allows development of industrial control software and related components. Specific examples of such interfaces will be shown in Figs. 5-10 which are described in more detail below. A user interface switch 210 allows interface views to be changed between normal data renderings or views 220 and macro views 230. The data views 220 display the substituted values indicated by the identifier components described above, whereas the macro view shows the name of the identifier component within the context of a given program or data structure. For example, if a rung comment were displayed in the data view 220, the rung comment might indicate "This rung programs the control voltage for Conveyor Number 10 Motor." If the interface switch 210 were activated via a suitable interface control such as a button or selection box, the user interface 200 could then display the macro view 230. The macro view in this example then would show the macro identifier components such as "This rung programs the control voltage for $conveyor name$, where the value Conveyor Number 10 Motor is substituted as the conveyor name during normal data view 220.

As can be appreciated substantially any type of substitution can be made. In another example, an actual data value is substituted. For example, in normal data view 220, a rendering may appear as "Temperature read by sensor is currently 25 degrees Celsius." In the macro view, the same rendering area of the interface 200 would show "Temperature read by sensor is currently *<value>*, where <value> is a pointer to an actual memory location representing the sensor temperature. It is noted that special characters can be defined to indicate a pointer as opposed to another value such as a string name.

The interface 200 and macro capabilities described herein provide many advantages. Since the macros would remain in the program and be rendered when displayed anytime a change was performed, all the associated references would also update saving the programmer from such task which is fraught with errors if performed manually. When the user copies a program or routine the macros would migrate with the copy and be re-rendered at the new location and thus, pick up on or derive values from the local environment. For example the same program could be copied from TI102 to TI103 and TI104 and all the references would be updated by just changing the program name. This feature provides inheritance so that code does not need to be changed. These macros can execute in the programming software and can be downloaded to the controller so no execution time is required by the processor to for example to construct strings. The macro capability allows designers to build reusable automation components that reduce errors in deploying a complex system, reduces the time it takes to build complex systems, and reduces the time to repair the system since no substantial penalty is incurred by providing descriptions with more descriptive names, for example.

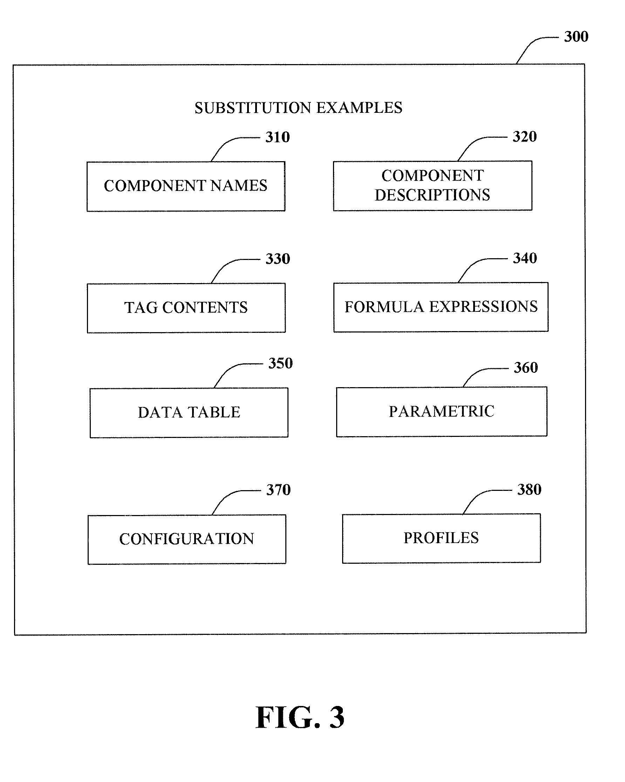

Referring to Fig. 3, example data structure substitution examples 300 are illustrated for an industrial controller development tool. In general, such tool provides a macro language that allows macro substitutions in comments, descriptions and tag initialization values, for example. Some possible substitutions include substitutions for component names at 310 (e.g., Tag, UDT, UDT Member, AOI, Program, Task, Controller, and so forth). Another type substitution includes component descriptions 320 (e.g., Tag, UDT, AOI, Routine, Program, Task, Controller, and so forth). Yet another substitution includes tag contents 330 (e.g., Numeric values, ASCII Strings, and so forth). Another type of substitution includes formulas (e.g., Expressions, Substrings, and so forth).

Another substitution example includes data table locations 350 such as with an I/O data table location on the controller. Such points generally represent logic levels such as a 0 or a 1 that a respective device may respond to or generate data according to. This can also include analog data that interacts with an analog table (e.g., integer value) on the controller model, where such data can be labeled with a respective substitution value. As used herein, a table can represent a series of contiguous or non-contiguous memory locations. These can also include tag values, PLC data table values, analog values, timer values, counter values and so forth. In yet another example of data structures that can be utilized with macros includes parametric data 360 that can be set or adjusted via a set of data structures on the controller. Such parameters can include data that affects operation of a device and often times is updated in real time during normal device operation and simulation. These can be device parameters, instruction parameters, message parameters, network parameters, equipment parameters, controller parameters, and so forth.

Configuration data 370 can be named via a macro command and can be adjusted via set configuration data from the controller. Such data is often set one time during startup of a device to guide operations of a device during the course of its operation. In another example, one or more profiles 380 may be associated with a macro name or value. Device profile data and controller profile data is utilized to model how a device or controller responds. For example, device profile data could include motor acceleration profiles, valve operating characteristics, mixer dynamics, power profiles and so forth which can all be suitably named via function or other criteria. Controller profiles 380 can include differing types of controller performance such as I/O scan capability, ladder logic scan capability, communications performance or bandwidth, and so forth.

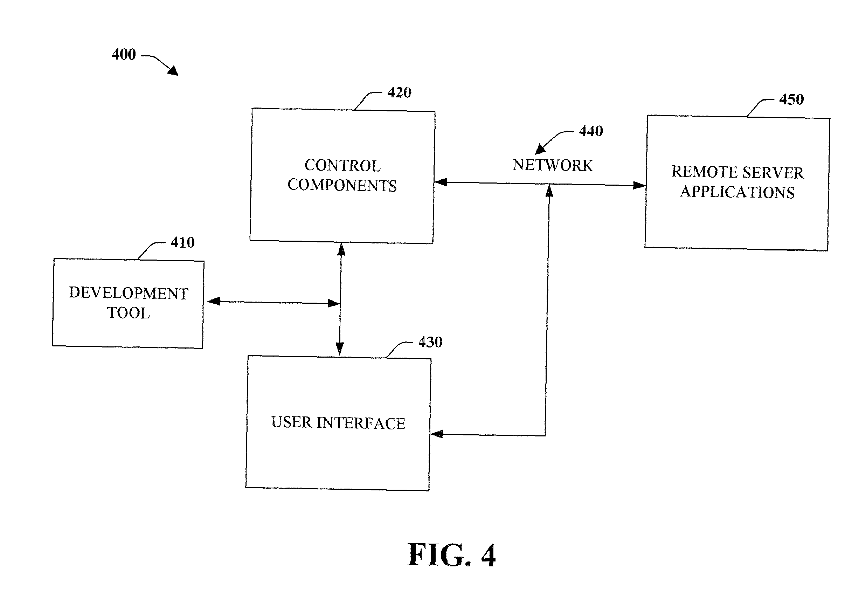

Fig. 4 illustrates an example system 400 that can be employed with the system 100 described above in Fig. 1. In this example, a development and documentation system 400 is shown that can be applied to an industrial control system for example. As shown, a development tool 410 can interact with one or more control components 420 and a user interface 430, where the interface can be employed to supply documentation in accordance with current or custom language contexts. The control components 420 and interface 430 can communicate across a network 440 with remote server applications.

The control components 420 can include various computer or network components such as servers, clients, programmable logic controllers (PLCs), communications modules, mobile computers, wireless components, control components and so forth which are capable of interacting across the network 440. Similarly, the term PLC as used herein can include functionality that can be shared across multiple components, systems, and/or networks 440. For example, one or more PLCs can communicate and cooperate with various network devices across the network 440. This can include substantially any type of control, communications module, computer, I/O device, sensor, Human Machine Interface (HMI)) such as the user interface 430 that communicate *via* the network 440 which includes control, automation, and/or public networks. The PLC can also communicate to and control various other devices such as Input/Output modules including Analog, Digital, Programmed/Intelligent I/O modules, other programmable controllers, communications modules, sensors, output devices, and the like, where the development tool 410 and user interface 430 can design/document various aspects for the control components 420.

The network 440 can include public networks such as the Internet, Intranets, and automation networks such as Control and Information Protocol (CIP) networks including DeviceNet and ControlNet. Other networks include Ethernet, DH/DH+, Remote I/O, Fieldbus, Modbus, Profibus, wireless networks, serial protocols, and so forth. In addition, the network devices can include various possibilities (hardware and/or software components). These include components such as switches with virtual local area network (VLAN) capability, LANs, WANs, proxies, gateways, routers, firewalls, virtual private network (VPN) devices, servers, clients, computers, configuration tools, monitoring tools, and/or other devices.

Turning to Figs. 5-10, various example interfaces are shown that illustrate various macro language concepts. It is to be appreciated however that the respective Figs. 5-10 are exemplary in nature and can be provided in a plurality of various formats. This can include a Graphical User Interface (GUI) to interact with a development tool or documentation and reporting components such as any type of application that sends, retrieves, processes, and/or manipulates data, receives, displays, formats, and/or communicates data, and/or facilitates operation of the development system. For example, such interfaces can also be associated with an engine, server, client, editor tool or web browser although other type applications can be utilized.

The GUI can include a display having one or more display objects for editing or viewing documentation objects including such aspects as configurable icons, buttons, sliders, input boxes, selection options, menus, tabs and so forth having multiple configurable dimensions, shapes, colors, text, data and sounds to facilitate operations with the development tool. In addition, the GUI can also include a plurality of other inputs or controls for adjusting and configuring one or more aspects. This can include receiving user commands from a mouse, keyboard, speech input, web site, remote web service or other device such as a camera or video input to affect or modify operations of the GUI.

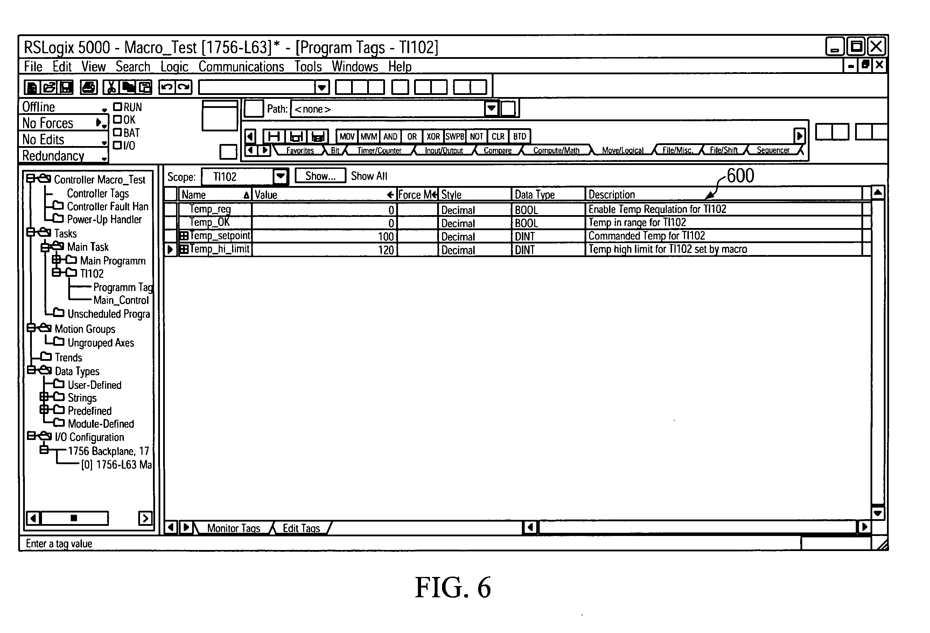

Referring to Fig. 5, program tag descriptions are shown with an embedded macro view at 500. As shown at 520, a description for a Boolean variable reads Enable Temp Regulation for #PROGRAM NAME#. Other examples show temp in range for #PROGRAM NAME#, commanded temp for #PROGRAM NAME#, and temp high level limit #PROGRAM NAME#. A normal data view is shown in Fig. 6 at 600, where the name TI102 has been substituted for the #PROGRAM NAME# field. As noted previously, a user interface switch can be provided that changes the macro view shown in Fig. 5 with the normal data view illustrated in Fig. 6. It is noted that although example strings are shown such as a single string e.g., V101, in large systems these may be hierarchical names such as "Syndney.plant5.mixing.line1.cooker3.recirculate.v101" for example.

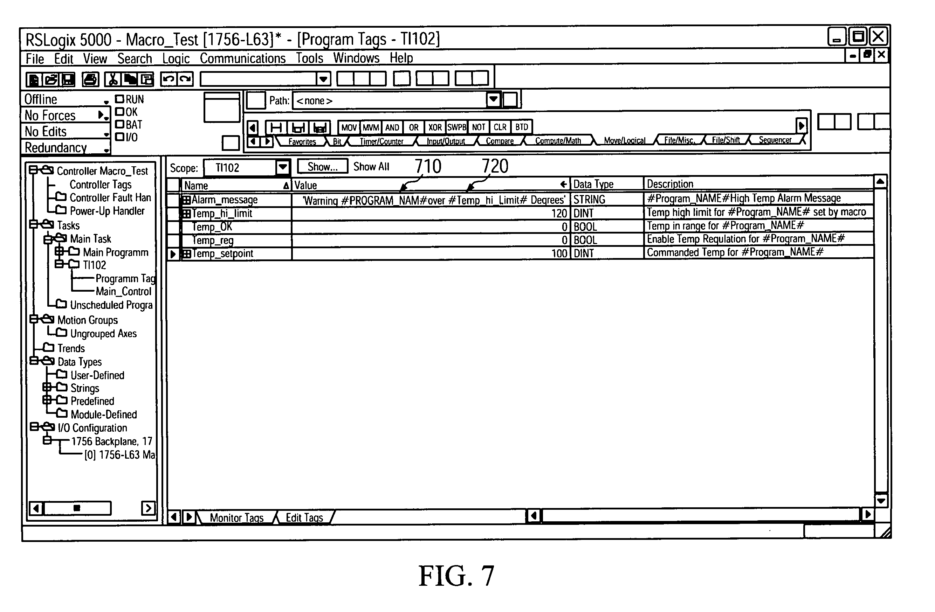

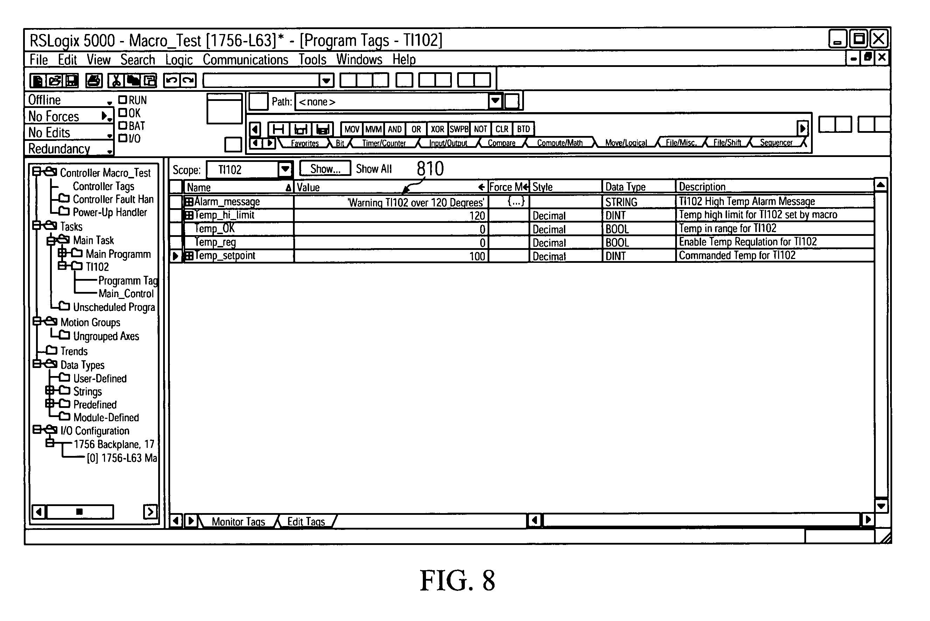

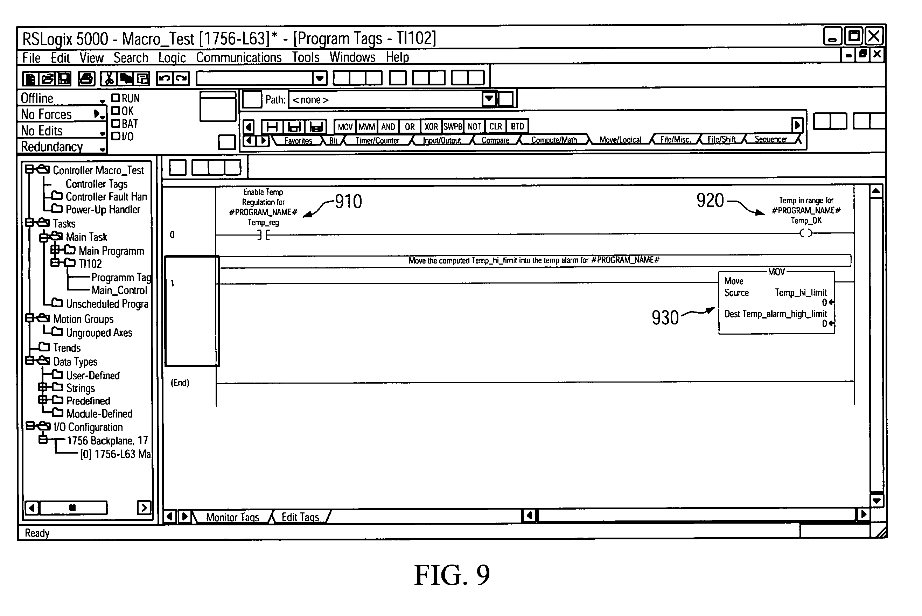

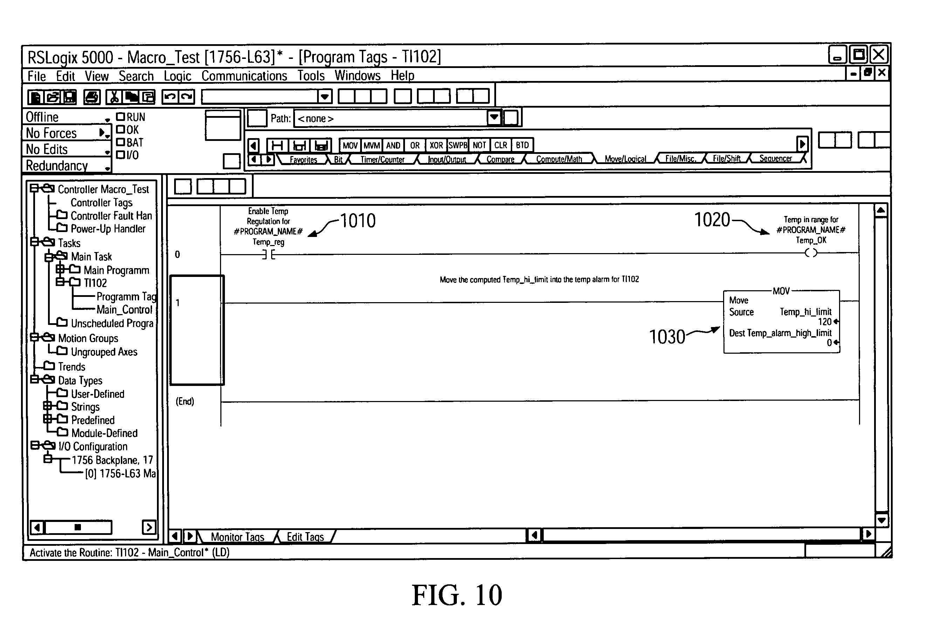

Proceeding to Fig. 7, macro capabilities are demonstrated for string substitutions. At 710 and 720, a macro view shows an alarm message - Warning #PROGRAM NAME# over #Temp_hi_Limit# Degrees. Fig. 8 shows the normal data view at 810 of the same message as Warning TI102 over 120 degrees, where TI102 is the PROGRAM NAME, and 120 is a data value representing a high limit temperature. In this example at 810, both string substitutions and actual data value substitutions are illustrated. Fig. 9 illustrates a macro view of rung comments at 910 and 920 that employ program name TI102. At 930, an instruction specifies the source operand as Temp_hi_Limit. Fig. 10 illustrates a normal data view of rung comments at 1010 and 1020 that display program name TI102. At 1030, an instruction specifies the source operand as Temp_hi_Limit where the actual data value for the source is shown as 120.

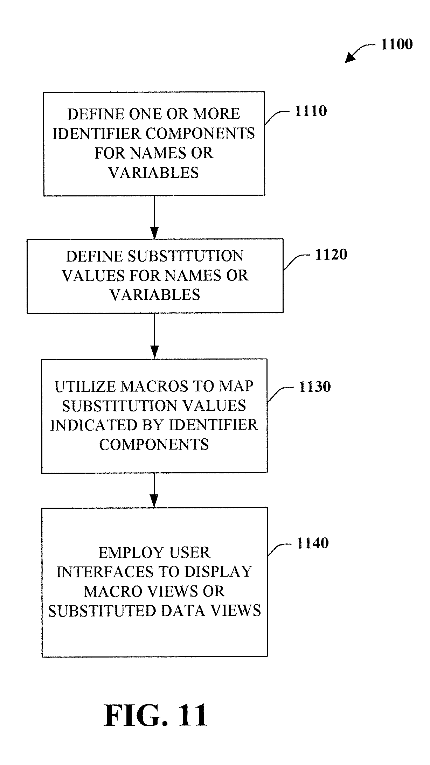

Fig. 11 illustrates a software documentation and macro process 1100. While, for purposes of simplicity of explanation, the methodology is shown and described as a series of acts, it is to be understood and appreciated that the methodology is not limited by the order of acts, as some acts may occur in different orders and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology as described herein.

Proceeding to 1110 of Fig. 11, one or more identifier components are defined to indicate/identity names relating to programs, instructions, variables, parameters, or substantially any type of data or documentation related to an industrial control program. As noted previously, identifiers can be substantially any type of character sequence or code such as @, $, %, &, *, and so forth. At 1120, one or more substitution values are defined for the data items identified at 1110. These can be string type values that are substituted or actual data values that are directed from the contents of a memory location specified by the identifier components. At 1130, a mapping is performed by a macro component where data substitution values are mapped to the locations specified by the identifier components. At 1140, user interfaces are provided to display macro data views where identifier components and data macro names are shown or switching to normal data views where substituted data values are displayed.

It is noted that the macros described above can be applied to various types of controller documentation or programming including custom applications. In general, the custom language components provide an additional level of language customization in how these components provide and process project documentation beyond multiple language support, where macros can be applied to such languages. For instance, consider a user that had an engineering staff developing a project and they included very verbose project documentation that not only documented what the code did, but why the developers decided to design in the manner they did. Similarly, when they provided documentation for production and their maintenance staff who worked in the same language, this class of users may have needed to know how the code operated, but didn't need the additional verboseness. Thus, the custom language components allows users to have a non-standard language designations which to add project documentation to. Using the above example, they could employ Developer (verbose version of documentation) and Maintenance (terse form of documentation) as custom languages in their project, in addition to any other standard languages. Macros could be employed to show data views depending on the identified types.

A project documentation manager can be provided to support custom language components. The documentation manager provides control over the various types of languages that may appear in a system and manages switching between the respective types. This includes providing macro support for current languages that are selected for a documentation system, default languages that may be alternative or foreign language components to the currently selected language, and the custom language components. These systems can also include a programming language editor that is associated with ladder logic, sequential function charts, tag editors, properties editors, function block editors, or structured text editors.

String identifiers are considered for custom language support. In this case, portions of a language can be designated or tagged to indicate that no translation of the tagged component is to occur. Thus, another use of the custom language components would be for a potential "un-translated strings" custom language that could be used as the default language for all documentation (or components thereof) that does not need to be translated. Custom languages may be designated in the same language where one set of documentation or components is verbose for one set of users and another set of documentation is less verbose for a different type of users.

In general, custom language components can be generated to address substantially any type of nuance associated with a particular user. This can include role-based documentation sets where depending on the type of user identified (e.g., manager, engineer, maintenance, security), a differing set of custom language documentation components are provided in view of such identification. Still other types of documentation may be context based where automatic components detect a given context (or alerted to a context) (e.g., maintenance or troubleshooting context, operator context, design context, and so forth), and select relevant custom language documentation to support the detected context. With regard to language applications, users can create a set of brief localized strings and then use macros to combine different strings to create the desired result. This would limit the translation effort and expense to the short strings rather than having to translate all of the individual test descriptions. When the short strings were translated, someone that did not read / speak that language could still create documentation by combining via a macro the predefined strings that are assigned to tags that they know or are aware of

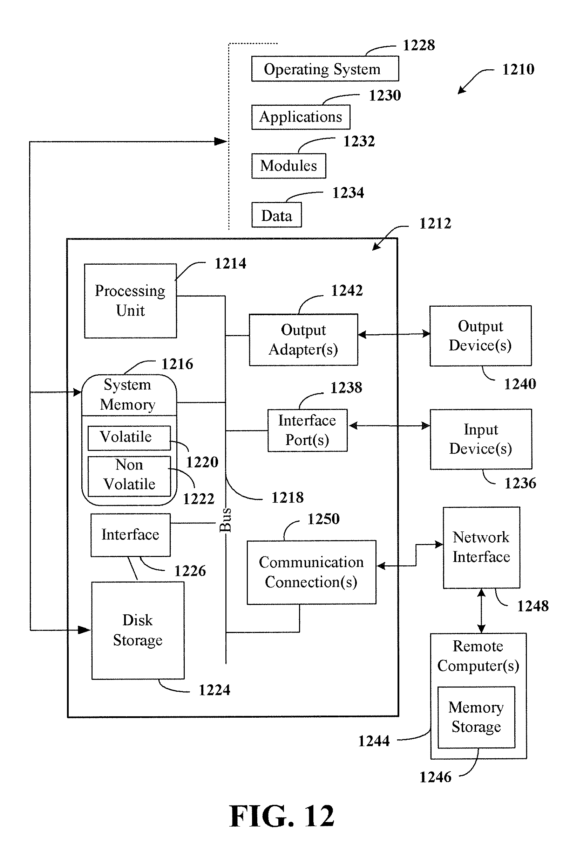

With reference to Fig. 12, an exemplary environment 1210 for implementing various aspects described herein includes a computer 1212. The computer 1212 includes a processing unit 1214, a system memory 1216, and a system bus 1218. The system bus 1218 couple system components including, but not limited to, the system memory 1216 to the processing unit 1214. The processing unit 1214 can be any of various available processors. Dual microprocessors and other multiprocessor architectures also can be employed as the processing unit 1214.

The system bus 1218 can be any of several types of bus structure(s) including the memory bus or memory controller, a peripheral bus or external bus, and/or a local bus using any variety of available bus architectures including, but not limited to, 11-bit bus, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Universal Serial Bus (USB), Advanced Graphics Port (AGP), Personal Computer Memory Card International Association bus (PCMCIA), and Small Computer Systems Interface (SCSI).

The system memory 1216 includes volatile memory 1220 and nonvolatile memory 1222. The basic input/output system (BIOS), containing the basic routines to transfer information between elements within the computer 1212, such as during start-up, is stored in nonvolatile memory 1222. By way of illustration, and not limitation, nonvolatile memory 1222 can include read only memory (ROM), programmable ROM (PROM), electrically programmable ROM (EPROM), electrically erasable ROM (EEPROM), or flash memory. Volatile memory 1220 includes random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM).

Computer 1212 also includes removable/non-removable, volatile/nonvolatile computer storage media. Fig. 12 illustrates, for example a disk storage 1224. Disk storage 1224 includes, but is not limited to, devices like a magnetic disk drive, floppy disk drive, tape drive, Jaz drive, Zip drive, flash memory card, or memory stick. In addition, disk storage 1224 can include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage devices 1224 to the system bus 1218, a removable or non-removable interface is typically used such as interface 1226.

It is to be appreciated that Fig 12 describes software that acts as an intermediary between users and the basic computer resources described in suitable operating environment 1210. Such software includes an operating system 1228. Operating system 1228, which can be stored on disk storage 1224, acts to control and allocate resources of the computer system 1212. System applications 1230 take advantage of the management of resources by operating system 1228 through program modules 1232 and program data 1234 stored either in system memory 1216 or on disk storage 1224. It is to be appreciated that various components described herein can be implemented with various operating systems or combinations of operating systems.

A user enters commands or information into the computer 1212 through input device(s) 1236. Input devices 1236 include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices connect to the processing unit 1214 through the system bus 1218 *via* interface port (s) 1238. Interface port(s) 1238 include, for example, a serial port, a parallel port, a game port, and a universal serial bus (USB). Output device(s) 1240 use some of the same type of ports as input device(s) 1236. Thus, for example, a USB port may be used to provide input to computer 1212 and to output information from computer 1212 to an output device 1240. Output adapter 1242 is provided to illustrate that there are some output devices 1240 like monitors, speakers, and printers, among other output devices 1240 that require special adapters. The output adapters 1242 include, by way of illustration and not limitation, video and sound cards that provide a means of connection between the output device 1240 and the system bus 1218. It should be noted that other devices and/or systems of devices provide both input and output capabilities such as remote computer(s) 1244.

Computer 1212 can operate in a networked environment using logical connections to one or more remote computers, such as remote computer(s) 1244. The remote computer(s) 1244 can be a personal computer, a server, a router, a network PC, a workstation, a microprocessor based appliance, a peer device or other common network node and the like, and typically includes many or all of the elements described relative to computer 1212. For purposes of brevity, only a memory storage device 1246 is illustrated with remote computer(s) 1244. Remote computer(s) 1244 is logically connected to computer 1212 through a network interface 1248 and then physically connected *via* communication connection 1250. Network interface 1248 encompasses communication networks such as local-area networks (LAN) and wide-area networks (WAN). LAN technologies include Fiber Distributed Data Interface (FDDI), Copper Distributed Data Interface (CDDI), Ethernet/IEEE 802.3, Token Ring/IEEE 802.5 and the like. WAN technologies include, but are not limited to, point-to-point links, circuit switching networks like Integrated Services Digital Networks (ISDN) and variations thereof, packet switching networks, and Digital Subscriber Lines (DSL).

Communication connection(s) 1250 refers to the hardware/software employed to connect the network interface 1248 to the bus 1218. While communication connection 1250 is shown for illustrative clarity inside computer 1212, it can also be external to computer 1212. The hardware/software necessary for connection to the network interface 1248 includes, for exemplary purposes only, internal and external technologies such as, modems including regular telephone grade modems, cable modems and DSL modems, ISDN adapters, and Ethernet cards.

What has been described above includes various exemplary aspects. It is, of course, not possible to describe every conceivable combination of components or methodologies for purposes of describing these aspects, but one of ordinary skill in the art may recognize that many further combinations and permutations are possible. Accordingly, the aspects described herein are intended to embrace all such alterations, modifications and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

**Claims**

1.  A software development tool for an industrial control system, comprising:

    one or more identifier components that indicate a portion of a data structure; and
    a macro component that maps one or more substitution values indicated by the identifier components into an alternative form of the data structure.

2.  The system of claim 1, the substitution value is associated with a string value or an actual data value specified in a memory location.

3.  The system of claim 1, the substitution value is associated with a component name or a component description.

4.  The system of claim 1, the substitution value is associated with tag contents or a formula expression.

5.  The system of claim 1, the substitution value is associated with a data table location or a parametric expression.

6.  The system of claim 1, the substitution value is associated with configuration data or profile data.

7. The system of claim 1, the substitution value is associated with a rung comment, text box, line comment, or an instruction data value.

8. A method to generate and process macro data values for an industrial control system, comprising:

defining one or more identifier components;
defining one or more substitution values for the identifier components; and
mapping the substitution values to locations indicated by the identifier components.

9. The method of claim 8, further comprising switching display views between a macro view and a view showing the substitution values.

10. The method of claim 8, further comprising initializing the substitution values via an arithmetic macro component.

IDENTIFIER COMPONENTS — 110

100

120

130

SUBSTITUTION VALUES

MACRO COMPONENT

140

DATA ITEMS WITH MAPPED SUBSTITUTION VALUES

**FIG. 1**

EP 2 104 037 A1

**FIG. 2**

EP 2 104 037 A1

300

SUBSTITUTION EXAMPLES

310

COMPONENT NAMES

320

COMPONENT
DESCRIPTIONS

330

TAG CONTENTS

340

FORMULA EXPRESSIONS

350

DATA TABLE

360

PARAMETRIC

370

CONFIGURATION

380

PROFILES

# FIG. 3

400 →

410 — DEVELOPMENT TOOL

420 — CONTROL COMPONENTS

430 — USER INTERFACE

440 — NETWORK

450 — REMOTE SERVER APPLICATIONS

**FIG. 4**

RSLogix 5000 - Macro_Test [1756-L63]* - [Program Tags - TI102]

File  Edit  View  Search  Logic  Communications  Tools  Windows  Help

Offline      □ RUN
No Forces    □ OK
No Edits     □ BAT
Redundancy   □ I/O

Path: <none>

Favorites / Bit / Timer/Counter / Input/Output / Compare / Compute/Math / Move/Logical / File/Misc. / File/Shift / Sequencer

Controller Macro_Test
    Controller Tags
    Controller Fault Han
    Power-Up Handler
Tasks
    Main Task
        Main Programm
        TI102
            Programm Tag
            Main_Control
    Unscheduled Progra
Motion Groups
    Ungrouped Axes
Trends
Data Types
    User-Defined
    Strings
    Predefined
    Module-Defined
I/O Configuration
    1756 Backplane, 17
        [0] 1756-L63 Ma

Scope:  TI102       Show...   Show All

| Name | ▲ | Value | ← | Force M◄ | Style | Data Type | Description | ◄ —510 |
|------|---|-------|---|----------|-------|-----------|-------------|--------|
| Temp_reg | | 0 | | | Decimal | BOOL | Enable Temp Regulation for #PROGRAM_NAME# | |
| Temp_OK | | 0 | | | Decimal | BOOL | Temp in range for #PROGRAM_NAME# | |
| Temp_setpoint | | 100 | | | Decimal | DINT | | |
| Temp_hi_limit | | #Temp_setpoint*120 | | | Decimal | DINT | Temp high limit for #PROGRAM_NAME# set by macro | |

510

Monitor Tags / Edit Tags

Enter a tag value

FIG. 5

14

RSLogix 5000 - Macro_Test [1756-L63]* - [Program Tags - TI102]

File  Edit  View  Search  Logic  Communications  Tools  Windows  Help

Offline          □RUN
No Forces    ▶  □OK
No Edits         □BAT
Redundancy   □I/O

Path: <none>

MOV | MVM | AND | OR | XOR | SWPB | NOT | CLR | BTD

Favorites \ Bit \ Timer/Counter \ Input/Output \ Compare \ Compute/Math \ Move/Logical \ File/Misc. \ File/Shift \ Sequencer

Controller Macro_Test
  Controller Tags
  Controller Fault Han
  Power-Up Handler
Tasks
  Main Task
    Main Programm
    TI102
      Programm Tag
      Main_Control
    Unscheduled Progra
Motion Groups
  Ungrouped Axes
Trends
Data Types
  User-Defined
  Strings
  Predefined
  Module-Defined
I/O Configuration
  1756 Backplane, 17
    [0] 1756-L63 Ma

Scope:  TI102          Show...   Show All

| Name ▲ | Value | Force M | Style | Data Type | Description |
|---|---|---|---|---|---|
| Temp_reg | 0 | | Decimal | BOOL | Enable Temp Regulation for TI102 |
| Temp_OK | 0 | | Decimal | BOOL | Temp in range for TI102 |
| Temp_setpoint | 100 | | Decimal | DINT | Commanded Temp for TI102 |
| Temp_hi_limit | 120 | | Decimal | DINT | Temp high limit for TI102 set by macro |

600

Monitor Tags \ Edit Tags

Enter a tag value

FIG. 6

EP 2 104 037 A1

RSLogix 5000 - Macro_Test [1756-L63]* - [Program Tags - TI102]

File   Edit   View   Search   Logic   Communications   Tools   Windows   Help

Offline    ▾  □RUN
No Forces  ▶  □OK
No Edits   ▾  □BAT
Redundancy ▾  □I/O

Path: <none>

MOV  MVM  AND  OR  XOR  SWPB  NOT  CLR  BTD

Favorites \ Bit \ Timer/Counter \ Input/Output \ Compare \ Compute/Math \ Move/Logical \ File/Misc. \ File/Shift \ Sequencer

Controller Macro_Test
— Controller Tags
— Controller Fault Han
— Power-Up Handler
Tasks
  Main Task
    Main Programm
      TI102
        — Programm Tag
        — Main_Control
  Unscheduled Progra
Motion Groups
  Ungrouped Axes
Trends
Data Types
  User-Defined
  Strings
  Predefined
  Module-Defined
I/O Configuration
  1756 Backplane, 17
    [0] 1756-L63 Ma

Scope:  TI102  ▾   Show...   Show All   710      720

| Name | Value | Data Type | Description |
|---|---|---|---|
| ⊞ Alarm_message | 'Warning #PROGRAM_NAM#over #Temp_hi_Limit# Degrees' | STRING | #Program_NAME#High Temp Alarm Message |
| ⊞ Temp_hi_limit | 120 | DINT | Temp high limit for #Program_NAME# set by macro |
| Temp_OK | 0 | BOOL | Temp in range for #Program_NAME# |
| Temp_reg | 0 | BOOL | Enable Temp Regulation for #Program_NAME# |
| ⊞ Temp_setpoint | 100 | DINT | Commanded Temp for #Program_NAME# |

Monitor Tags \ Edit Tags

FIG. 7

RSLogix 5000 - Macro_Test [1756-L63]* - [Program Tags - TI102]

File  Edit  View  Search  Logic  Communications  Tools  Windows  Help

Offline     □RUN
No Forces   □OK
No Edits    □BAT
Redundancy  □I/O

Path: <none>

MOV MVM AND OR XOR SWPB NOT CLR BTD

Favorites ⟋ Bit ⟋ Timer/Counter ⟋ Input/Output ⟋ Compare ⟋ Compute/Math ⟋ Move/Logical ⟋ File/Misc. ⟋ File/Shift ⟋ Sequencer ⟋

Controller Macro_Test
— Controller Tags
— Controller Fault Han
— Power-Up Handler
Tasks
  Main Task
    Main Programm
    TI102
      — Programm Tag
      — Main_Control
  Unscheduled Progra
Motion Groups
  Ungrouped Axes
Trends
Data Types
  User-Defined
  Strings
  Predefined
  Module-Defined
I/O Configuration
  1756 Backplane, 17
    [0] 1756-L63 Ma

Scope: TI102   Show...  Show All   810

| Name | Value | Force M | Style | Data Type | Description |
|---|---|---|---|---|---|
| ⊞Alarm_message | 'Warning TI102 over 120 Degrees' | {...} | | STRING | TI102 High Temp Alarm Message |
| ⊞Temp_hi_limit | 120 | | Decimal | DINT | Temp high limit for TI102 set by macro |
| Temp_OK | 0 | | Decimal | BOOL | Temp in range for TI102 |
| Temp_reg | 0 | | Decimal | BOOL | Enable Temp Regulation for TI102 |
| ⊞Temp_setpoint | 100 | | Decimal | DINT | Commanded Temp for TI102 |

Monitor Tags ⟋ Edit Tags /

FIG. 8

RSLogix 5000 - Macro_Test [1756-L63]* - [Program Tags - TI102]

File  Edit  View  Search  Logic  Communications  Tools  Windows  Help

Offline       □ RUN
No Forces     □ OK
No Edits       □ BAT
Redundancy    □ I/O

Path: <none>

MOV MVM AND OR XOR SWPB NOT CLR BTD

Favorites ⟍ Bit ⟍ Timer/Counter ⟍ Input/Output ⟍ Compare ⟍ Compute/Math ⟍ Move/Logical ⟍ File/Misc. ⟍ File/Shift ⟍ Sequencer

Controller Macro_Test
  Controller Tags
  Controller Fault Han
  Power-Up Handler
  Tasks
    Main Task
      Main Programm
        TI102
          Programm Tag
          Main_Control
      Unscheduled Progra
  Motion Groups
    Ungrouped Axes
  Trends
  Data Types
    User-Defined
    Strings
    Predefined
    Module-Defined
  I/O Configuration
    1756 Backplane, 17
      [0] 1756-L63 Ma

Enable Temp
Regulation for
#PROGRAM_NAME#
Temp_reg

910

920

Temp in range for
#PROGRAM_NAME#
Temp_OK

0    ─] [─                                                              ─( )─

1

Move the computed Temp_hi_limit into the temp alarm for #PROGRAM_NAME#

930

MOV
Move
Source        Temp_hi_limit
                          0
Dest  Temp_alarm_high_limit
                          0

(End)

Monitor Tags ⟍ Edit Tags

Ready

FIG. 9

RSLogix 5000 - Macro_Test [1756-L63]* - [Program Tags - TI102]

File  Edit  View  Search  Logic  Communications  Tools  Windows  Help

Offline          □RUN
No Forces        □OK
                 □BAT
No Edits          □I/O
Redundancy

Path: <none>

| MOV | MVM | AND | OR | XOR | SWPB | NOT | CLR | BTD |

Favorites / Bit / Timer/Counter / Input/Output / Compare / Compute/Math / Move/Logical / File/Misc. / File/Shift / Sequencer

Controller Macro_Test
  — Controller Tags
  —◻ Controller Fault Han
  —◻ Power-Up Handler
◻ Tasks
  ◻ Main Task
    ◻ Main Programm
    ◻ TI102
       — Programm Tag
       — Main_Control
    —◻ Unscheduled Progra
◻ Motion Groups
  —◻ Ungrouped Axes
—◻ Trends
◻ Data Types
  —◻ User-Defined
  ◻ Strings
  ◻ Predefined
  —◻ Module-Defined
◻ I/O Configuration
  ◻—1756 Backplane, 17
       —[0] 1756-L63 Ma

```
                    Enable Temp                                                    Temp in range for
                    Regulation for      ___1010            1020___                 #PROGRAM_NAME#
                    #PROGRAM_NAME#                                                  Temp_OK
                    Temp_reg
0                   ⊣ ⊢                                                            —( )—


                          Move the computed Temp_hi_limit into the temp alarm for TI102

                                                                          ┌MOV──────────┐
1                                                                         │Move         │
                                                                          │Source  Temp_hi_limit │
                                          1030___                         │              120 ◄│
                                                                          │Dest Temp_alarm_high_limit │
                                                                          │                0 ◄│
                                                                          └─────────────┘


(End)
```

Monitor Tags / Edit Tags /

Activate the Routine: TI102 - Main_Control* (LD)

**FIG. 10**

1100

DEFINE ONE OR MORE
IDENTIFIER COMPONENTS
FOR NAMES OR
VARIABLES — 1110

DEFINE SUBSTITUTION
VALUES FOR NAMES OR
VARIABLES — 1120

UTILIZE MACROS TO MAP
SUBSTITUTION VALUES
INDICATED BY IDENTIFIER
COMPONENTS — 1130

EMPLOY USER
INTERFACES TO DISPLAY
MACRO VIEWS OR
SUBSTITUTED DATA VIEWS — 1140

FIG. 11

FIG. 12

| Europäisches Patentamt<br>European Patent Office<br>Office européen des brevets | **EUROPEAN SEARCH REPORT** | **Application Number**<br>EP 08 16 5215 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SAKHAROV A: "MACRO PROCESSING IN HIGH-LEVEL LANGUAGES"<br>ACM SIGPLAN NOTICES, ACM, ASSOCIATION FOR COMPUTING MACHINERY, NEW YORK, NY, US, vol. 27, no. 11,<br>1 November 1992 (1992-11-01), pages 59-66, XP000328425<br>ISSN: 0362-1340<br>* the whole document * | 1-10 | INV.<br>G06F9/44 |
| A | CARDOSO J M P ET AL: "Macro-based hardware compilation of Java<TM> bytecodes into a dynamic reconfigurable computing system"<br>21 April 1999 (1999-04-21),<br>FIELD-PROGRAMMABLE CUSTOM COMPUTING MACHINES, 1999. FCCM '99. PROCEEDI NGS. SEVENTH ANNUAL IEEE SYMPOSIUM ON NAPA VALLEY, CA, USA 21-23 APRIL 1999, LOS ALAMITOS, CA, USA,IEEE COMPUT. SOC, US, PAGE(S) 2 - 11 , XP010359161<br>ISBN: 978-0-7695-0375-2<br>* abstract * | 1-10 | |
| A | US 4 553 205 A (PORCHIA SALVATORE [US])<br>12 November 1985 (1985-11-12)<br>* abstract * | 1-10 | TECHNICAL FIELDS SEARCHED (IPC)<br><br>G06F |

The present search report has been drawn up for all claims

| Place of search | Date of completion of the search | Examiner |
|---|---|---|
| The Hague | 26 November 2008 | Archontopoulos, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 08 16 5215

This annex lists the patent family members relating to the patent documents cited in the above-mentioned European search report.
The members are as contained in the European Patent Office EDP file on
The European Patent Office is in no way liable for these particulars which are merely given for the purpose of information.

26-11-2008

| Patent document cited in search report | Publication date | Patent family member(s) | Publication date |
|---|---|---|---|
| US 4553205 A | 12-11-1985 | NONE | |

EPO FORM P0459

For more details about this annex : see Official Journal of the European Patent Office, No. 12/82